# EUROPEAN PATENT APPLICATION

(11) **EP 2 487 941 A1**
(43) Date of publication of application: **15.08.2012**
(21) Application number: 10854621.9
(22) Date of filing: 19.10.2010
(51) Int. Cl.: H04W 4/12

(54) **MAIL SENDING METHOD FOR MOBILE TERMINALS, AND MAIL SYSTEM**

(30) Priority: 14.07.2010 CN 201010230247
(71) Applicant: ZTE Corporation, Shenzhen, Guangdong 518057 (CN)
(72) Inventor: SUN, Xiaoli, Guangdong 518057 (CN)
(74) Representative: Novagraaf Technologies
(86) International application number: PCT/CN2010/077891
(87) International publication number: WO 2012/006829

(57) **Abstract**

The present invention provides a mail delivery method for a mobile terminal, which method comprises: a server sending a mail from a sender to a mobile terminal; and the mobile terminal displaying the mail at the time point set by the sender. The present invention further provides a mail system, which system comprises: a server for sending a mail from a sender to a mobile terminal; and the mobile terminal for displaying the mail at the time point set by the sender. The present invention solves the problem in the prior art, which is the fixed-time sending of the mail may be delayed, by means of fixed-time display, thus making the mail alert more punctual.

## Description

### Field of the Invention

The present invention relates to the communication field, and in particular to a mail delivery method and a mail system for a mobile terminal.

### Background of the Invention

Now many mail servers have provided the function of sending mails at specified time, a way to alert concerned parties to pay attention to the alerted items.

However, the inventors find that if the mobile phone mail box of a mobile terminal does not have automatic receiving set up or the network connection condition of the mobile terminal is not good, then even if a mail is sent at specified time, the mobile terminal still cannot receive this mail at that time. Thus, it loses the function of alerting concerned parties in the form of mail sent at specified time. For example, a sender wants to give a surprise (birthday wishes, festival bless, etc.) to a recipient in the form of mail at specified time, then the mail can be set to be sent out at the festival or birthday, however, if the mobile phone mail box of a mobile terminal held by the recipient did not have automatic receiving set up or the network connection condition of the mobile terminal is not good, it will result in that the mail cannot be received on that very day, then even if the mail is received afterwards, it will lose significance.

### Summary of the Invention

The main object of the present invention is to provide a mail delivery method and a mail system for a mobile terminal so as to at least solve the above problem that mails sent at specified time may be delayed.

One aspect of the present invention provides a mail delivery method for a mobile terminal, which method comprises: a server sending a mail from a sender to a mobile terminal; and the mobile terminal displaying the mail at the time point set by the sender.

The server sending a mail from a sender to a mobile terminal comprises: the server receiving a mail from a sender, wherein the mail header of the mail includes: a time point field for indicating a time point, an ID field for indicating the ID of a mail, and a recipient field for indicating a recipient; the server interpreting the mail header; the server obtaining and recording the time point, the ID and the recipient; the mobile terminal initiating and completing retrieval of the mail of the recipient from the server before the time point; or if the mobile terminal still does not retrieve the mail of the recipient at the time point, then the server initiating and completing delivery of the mail of the recipient to the mobile terminal at the time point or notifying the mobile terminal to receive the mail of the recipient.

When the mobile terminal initiates and completes retrieval of the mail of the recipient from the server before the time point, the mobile terminal displaying the mail at the time point set by the sender comprises: the mobile terminal interpreting the mail header; if the time point is obtained, then the mobile terminal not adding the mail into a mail list and not prompting receipt of the mail on a user interface; when it is at the time point, the server notifying the mobile terminal; and if receiving the notification, then the mobile terminal prompting receipt of the mail on the user interface and adding the mail into the mail list.

When it is at the time point, the server initiates and completes delivery of the mail of the recipient to the mobile terminal or notifies the mobile terminal to receive the mail of the recipient, the mobile terminal displaying the mail at the time point set by the sender comprises: when it is at the time point, the server notifying the mobile terminal; if receiving the notification, then the mobile terminal prompting receipt of the mail on a user interface and adding the mail into the mail list.

The server notifies the mobile terminal by instant messaging.

The server records the time point, the ID and the recipient in a database table, and the server browses the database table periodically; when it is determined that it is at the time point during the browsing process, it will trigger notifying the mobile terminal and delete the record of the mail in the database table.

If the mobile terminal still has not retrieved the mail of the recipient at the time point, then it will further trigger the operation of the server initiating and completing delivery of the mail of the recipient to the mobile terminal.

The server sending a mail from a sender to a mobile terminal comprises: the mobile terminal receiving a mail which a sender sends to a recipient, wherein the mail header of the mail includes: a time point field for indicating a time point, an ID field for indicating the ID of a mail, and a recipient field for indicating a recipient; the mobile terminal interpreting the mail header; the mobile terminal obtaining and recording the time point, the ID and the recipient, and the mobile terminal not adding the mail into the mail list and not prompting receipt of the mail on the user interface; and when it is at the time point, the mobile terminal prompting receipt of the mail on the user interface and adding the mail into the mail list.

The mobile terminal records the time point, the ID and the recipient in the database table, and the mobile terminal browses the database table periodically; when it is determined that it is at the time point during the browsing process, it will trigger the operation of prompting receipt of the mail on the user interface and the operation of adding the mail into the mailing list, and delete the record of the mail in the database table.

The method further comprises: setting a tag in the mail list for indicating that the mail is a mail to be delivered at specified time point and removing the tag after the mail has been read.

The present invention further provides a mail system, which system comprises: a server for sending a mail from a sender to a mobile terminal; and the mobile terminal for displaying the mail at the time point set by the sender.

The present invention solves the above problem that mails sent at specified time may be delayed, then making the mail alert more punctual.

### Brief Description of the Accompanying Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flow chart of a mail delivery method for a mobile terminal according to the embodiments of the present invention;
Fig. 2 is a flow chart of a mail delivery method for a mobile terminal according to the preferred embodiments of the present invention; and
Fig. 3 is a flow chart of a mail delivery method for a mobile terminal according to the preferred embodiments of the present invention.

### Detailed Description of the Embodiments

The embodiments of the present invention will be described hereinafter in detail in conjunction with the drawings thereof. It needs to note that the embodiments of the present invention and the features in the embodiments can be combined with each other if there is no conflict.

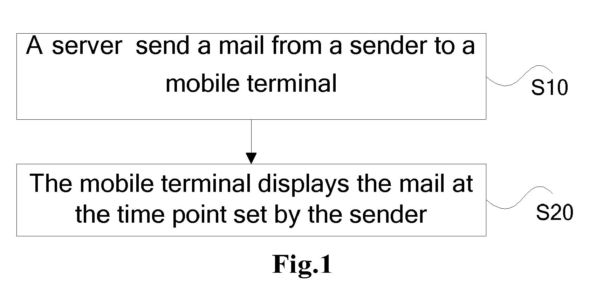

Fig. 1 is a flow chart of a mail delivery method for a mobile terminal, according to the embodiments of the present invention, and it includes:
step S10: a server sends a mail from a sender to a mobile terminal; and
step S10: the mobile terminal displays the mail at the time point set by the sender.

For alerting the recipient at a specified time, a method for delivering a mail is used in the prior art. However, due to the delay of mail receiving, the mobile terminal may not receive the mail that very day, then even if the mail is received afterwards, it loses the significance. While in this embodiment, the mail is sent timely but not displayed, instead the mail will be displayed at the time point set by the sender. Thus, the sender can designate the time when a mail can be read by the recipient when sending the mail, only when it is at the time point designated by the sender, the mail can be received and displayed or is already in the local mail file system and can be directly displayed, otherwise, even if the mail has already been received, the local mail file system still cannot be viewed by the recipient at this moment, and it is transparent to the recipient. Thus, the mail possesses the personalized reflection of the user, which not only can give an unexpected surprise to the recipient but also solves the problem that the fixed-time sending of mail is delayed. Also, such mail alert can be as accurate as certain time point at certain day, which makes the mail alert more punctual.

Preferably, step S10 includes:
a server receiving a mail from a sender, wherein the mail header of the mail includes: a time point field for indicating a time point, an ID field for indicating the ID of a mail, and a recipient field for indicating a recipient;
the server interpreting the mail header;
the server obtaining and recording the time point, the ID and the recipient; and
the mobile terminal initiating and completing retrieval of the mail of the recipient from the server before the time point; or if the mobile terminal still does not retrieve the mail of the recipient at the time point, the server initiating and completing delivery of the mail of the recipient to the mobile terminal at the time point or notifying the mobile terminal to receive the mail of the recipient.

In this preferred embodiment, for achieving display at specified time, a time point field (e.g. x_DisplayOnTime) for indicating a time point is newly added in the mail header, thus it requires the server and the mobile terminal to support this field. This method makes little change to the prior art, which is simple and feasible.

Preferably, when the mobile terminal initiates and completes retrieval of the mail of the recipient from the server before the time point, step S20 includes:
the mobile terminal interpreting the mail header;
if obtaining this time point, then the mobile terminal not adding the mail into a mail list and not prompting receipt of the mail on a user interface;
when it is at the time point, the server notifying the mobile terminal; and
if receiving the notification, the mobile terminal prompting receipt of the mail on the user interface and adding the mail into the mail list.

In this preferred embodiment, if the mobile terminal receives the mail which requires fixed-time display in advance by manner of automatic receiving or manual receiving, etc., then the mail is set to be not displayed temporarily and transparent to the user and will be displayed when it is at the time point, thereby the fixed-time display of mail is achieved simply and feasibly.

Preferably, when it is at the time point, the server initiates and completes delivery of the mail of the recipient to the mobile terminal or notifies the mobile terminal to receive the mail of the recipient, step S20 includes: when it is at the time point, the server notifying the mobile terminal; and if receiving the notification, then the mobile terminal prompting receipt of the mail on the user interface and adding the mail into the mail list. In this preferred embodiment, if the mobile terminal still has not received the mail when it is at the time point, then it initiates and completes delivery of the mail to the mobile terminal, which makes the operation of the user convenient. Of course, the mobile terminal can also only be notified that it needs to receive the mail, and then the user receives this mail by manual operation by himself.

Preferably, the server can notify the mobile terminal by instant messaging. The cost of short message is low, and it is a generally-used notification manner at present.

Preferably, in the above method, the server records the time point, the ID and the recipient in a database table, and the server browses the database table periodically; when it is determined that it is at the time point during the browsing process, it will trigger notifying the mobile terminal and delete the record of the mail in the database table. Preferably, if the mobile terminal still has not retrieved the mail of the recipient at the time point, then it will further trigger the operation of the server initiating and completing delivery of the mail of the recipient to the mobile terminal. In these two preferred embodiments, whether it is at the time point is judged by the server, browsing the database table periodically requires to consume a certain amount of computing capability and requires certain program setting, and browsing the database table periodically being achieved by the server can lighten the load of the mobile terminal and avoid from requiring all the mobile terminals to perform software upgrade.

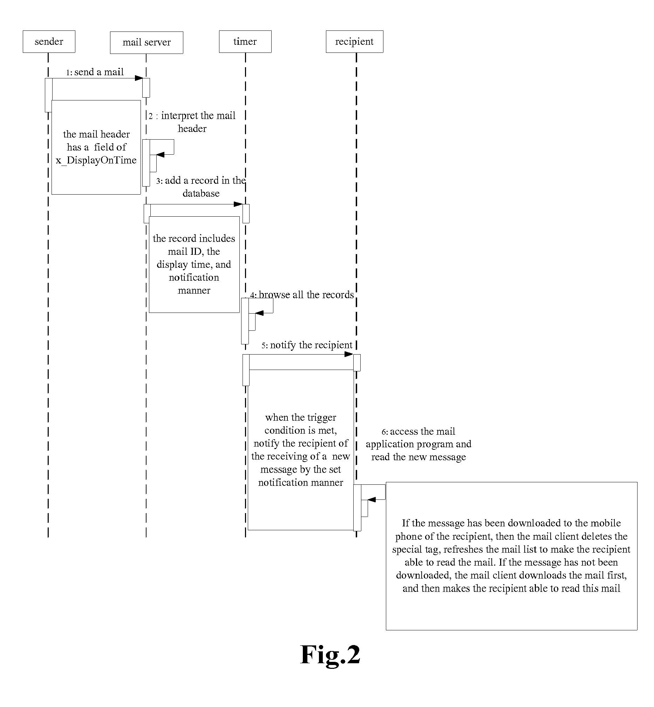

All the above embodiments require the server and the mobile terminal to support the setting of the time point field simultaneously, and Fig. 2 is a flow chart of a mail delivery method for a mobile terminal according to the above preferred embodiments, which includes the following steps:
1. After having edited a new mail, sender A clicks the *option* to select fixed time display, then a fixed time display dialog box pops out, and the sender inputs the time for the display, selects the manner of fixed time display notification (SMS push, IP push or CMWAP push), and then confirms and clicks *send.*
2. When receiving this mail, a mail server interprets the mail header.
3. If it is found that the mail header contains an x_DisplayOnTime field when interpreting, then interpret the field value transmitted and fill the mail ID, the time of fixed time display, and the manner of fixed time display notification into a database table.
4. A fixed time display service subsystem at the server end browses this database table constantly.
5. If the trigger condition is met, then send a PUSH MAIL message to the recipient and then delete this record from the database table.
6. If recipient B has downloaded this mail which will be displayed at fixed time into a local mail file system, then the recipient can access the mail application to open this mail reading interface and read this mail after having received the PUSH MAIL message,. If recipient B does not download this mail which will be displayed at fixed time into the local mail file system, then after the recipient has received the PUSH MAIL message, a mail client will be connected to the server end to download this mail into the local file system, and the mail server puts a delete tag on this mail after the downloading is over, and the mail client is disconnected from the server, at this moment the mail server performs physical deletion to this mail. Recipient B accesses the mail application to read this mail. When this mail has been read, this special tag is removed.

Preferably, step S10 includes:
the mobile terminal receiving the mail sent by the sender to the recipient, wherein the mail header of the mail includes: a time point field for indicating a time point, an ID field for indicating the ID of a mail, and a recipient field for indicating a recipient;
the mobile terminal interpreting the mail header;
the mobile terminal obtaining and recording the time point, the ID and the recipient, and the mobile terminal not adding the mail into the mail list and not prompting receipt of the mail on the user interface; and
when it is at the time point, the mobile terminal prompting receipt of the mail on the user interface and adding the mail into the mail list.

This preferred embodiment only requires the mobile terminal to support the setting of the time point field, which avoids the load of server upgrade.

Preferably, in the above method, the mobile terminal records the time point, the ID and the recipient in a database table, and the mobile terminal browses the database table periodically; when it is determined that it is at the time point during the browsing process, it will trigger the operation of prompting receipt of the mail on the user interface and the operation of adding the mail into the mail list, and delete the record of the mail in the database table. It can be seen that, although this preferred embodiment avoids the load of server upgrade, it requires the mobile terminal to browse the database table periodically, which will increase the load of the mobile terminal.

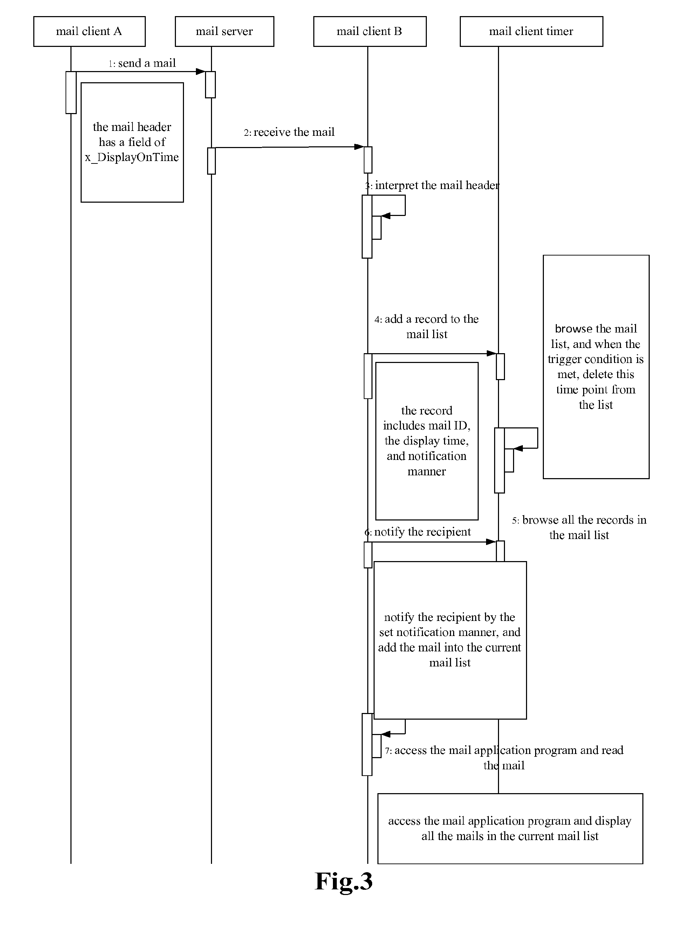

The above preferred embodiment only requires the mobile terminal to support the setting of the time point field, but it will increase the load of the mobile terminal. Fig. 3 is a flow chart of a mail delivery method for a mobile terminal according to the above preferred embodiments, and it includes:
1. After having edited a new mail, sender A clicks the *option* to select fixed-time display, then a fixed-time display dialog box pops out, and the sender inputs the time of regular display, selects the manner of fixed-time display notification (SMS push, and IP push), and then confirms and clicks to send to recipient B.
2. Mail client B receives this mail.
3. Mail client B interprets the mail header.
4. If it is found that the mail header includes an x_DisplayOnTime field when interpreting, then interpret the field value transmitted and fill the mail ID, the time of fixed-time display, the manner of fixed-time display notification into the database table, and put a special tag on this mail, which tag indicates that the mail only can be displayed at special time, and a mail with this tag will not be loaded into the current mail list.
5. A fixed-time service subsystem of the mail client browses this linked list constantly.
6. If the trigger condition is met, then send a PUSH MAIL message to the recipient, then delete this record from the mail list which is displayed at fixed time and remove the fixed-time display tag of this mail. Only at this moment, the mail can be loaded into the mail list which requires to be displayed currently.
7. After having received the PUSH MAIL message, then the recipient can access the mail application to opening this mail reading interface and read this mail.

Preferably, in the above method, it further comprises: setting a tag in the mail list for indicating that the mail is a mail to be displayed at specified time point and removing the tag after the mail has been read. The setting of the tag can alert the recipient that it is a surprising mail more notably and avoid the confusion with other mails.

The embodiments of the present invention further provide a mail system, which system comprises: a server for sending a mail from a sender to a mobile terminal; and the mobile terminal for displaying the mail at the time point set by the sender.

It can be seen from the above description that the above embodiments solve the problem in the prior art that the regular sending of mails may be delayed by means of regular display, then making the mail alert more punctual.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A method for delivering a mail to a mobile terminal, **characterized by** comprising:
a server sending the mail from a sender to the mobile terminal; and
said mobile terminal displaying said mail at a time point set by said sender.

2. The method according to claim 1, **characterized in that** the server sending the mail from a sender to the mobile terminal comprises:
said server receiving the mail from said sender, wherein a mail header of said mail includes: a time point field for indicating said time point, an ID field for indicating an ID of said mail, and a recipient field for indicating a recipient;
said server interpreting said mail header;
said server obtaining and recording said time point, said ID and said recipient; and
said mobile terminal initiating and completing retrieval of the mail addressed to the recipient from said server before said time point; or if said mobile terminal still has not retrieved the mail addressed to the recipient at said time point, said server initiating and completing delivery of the mail of said recipient to said mobile terminal when it is said time point or notifying said mobile terminal to receive the mail addressed to said recipient.

3. The method according to claim 2, **characterized in that**, when said mobile terminal initiates and completes retrieval of the mail addressed to said recipient from said server before said time point, said mobile terminal displaying said mail at the time point set by said sender comprising:
said mobile terminal interpreting said mail header;
if said time point is obtained, then said mobile terminal not adding said mail into a mail list and not prompting receipt of said mail on a user interface;
when it is said time point, said server notifying said mobile terminal; and
if receiving said notification, then said mobile terminal prompting receipt of said mail on said user interface and adding said mail into said mail list.

4. The method according to claim 2, **characterized in that**, when said server initiates and completes delivery of the mail addressed to said recipient to said mobile terminal or notifies said mobile terminal to receive the mail addressed to said recipient at said time point, said mobile terminal displaying said mail at the time point set by said sender comprising:
when it is said time point, said server notifying said mobile terminal; and
if receiving said notification, then said mobile terminal prompting receipt of said mail on said user interface and adding said mail into said mail list.

5. The method according to claim 3 or 4, **characterized in that**, said server notifies said mobile terminal by instant messaging.

6. The method according to claim 3 or 4, **characterized in that** said server records said time point, said ID and said recipient in a database table, and browses said database table constantly, and when it is determined that it is said time point during the browsing process, the method further comprising triggering notifying said mobile terminal and deleting the record of said mail from said database table.

7. The method according to claim 6, **characterized in that**, if said mobile terminal still has not retrieved the mail addressed to said recipient at said time point, the method further comprising triggering said server initiating and completing delivery of the mail addressed to said recipient to said mobile terminal.

8. The method according to claim 1, **characterized in that** the server sending a mail from a sender to a mobile terminal comprising:
said mobile terminal receiving a mail which said sender sends to the recipient, wherein the mail header of said mail includes: a time point field for indicating said time point, an ID field for indicating the ID of said mail, and a recipient field for indicating said recipient;
said mobile terminal interpreting said mail header;
said mobile terminal obtaining and recording said time point, said ID and said recipient, and said mobile terminal not adding said mail into a mail list and not prompting receipt of said mail on the user interface; and
when it is said time point, said mobile terminal prompting receipt of said mail on said user interface and adding said mail into said mail list.

9. The method according to claim 8, **characterized in that**, said mobile terminal records said time point, said ID and said recipient in a database table, and said mobile terminal browses said database table periodically; when it is determined that it is said time point during the browsing process, the method further comprising triggering prompting receipt of said mail on said user interface and adding said mail into said mail list, and deleting the record of said mail in said database table.

10. The method according to any one of claims 3, 4, 8, and 9, **characterized by** further comprising: setting a tag in said mail list for indicating that said mail is a mail to be displayed at specified time point; and removing said tag after said mail has been read.

11. A mail system, **characterized by** comprising:
a server for sending a mail from a sender to a mobile terminal;
said mobile terminal for displaying said mail at a time point set by said sender.
